(19) Europäisches Patentamt
European Patent Office
Office européen des brevets

(11) Veröffentlichungsnummer: **0 338 004 B1**

(12) # EUROPÄISCHE PATENTSCHRIFT

(45) Veröffentlichungstag der Patentschrift: **07.04.93**

(51) Int. Cl.⁵: **C08F 291/18**, C08J 7/18, B01D 61/36, B01D 71/06

(21) Anmeldenummer: **88900343.0**

(22) Anmeldetag: **16.12.87**

(86) Internationale Anmeldenummer: **PCT/DE87/00594**

(87) Internationale Veröffentlichungsnummer: **WO 88/04677 (30.06.88 88/14)**

(54) **POLYMER MIT BETAINSTRUKTUR, LÖSUNGSDIFFUSIONSMEMBRAN, VERFAHREN ZU IHRER HERSTELLUNG UND IHRE VERWENDUNG.**

(30) Priorität: **19.12.86 DE 3643574**

(43) Veröffentlichungstag der Anmeldung: **25.10.89 Patentblatt 89/43**

(45) Bekanntmachung des Hinweises auf die Patenterteilung: **07.04.93 Patentblatt 93/14**

(84) Benannte Vertragsstaaten: **AT BE CH DE FR GB IT LI NL SE**

(56) Entgegenhaltungen:
**EP-A- 0 032 622**
**CH-A- 380 373**
**US-A- 3 666 693**

**Database Chemical Abstracts (HOST:STN), Record Nr. 96(26) : 2183269, 28. Juni 1982, siehe Zeilen 20-21**

(73) Patentinhaber: **GFT Gesellschaft für Trenntechnik mbH
Gerberstrasse 48
W-6650 Homburg/Saar(DE)**

(72) Erfinder: **NIEMÖLLER, Axel
Hellenthalerstr. 20
W-5000 Köln 41(DE)**
Erfinder: **Brüschke, Hartmut,Ernst,Artur
Kurpfalzstrasse 64
W-6907 Nussloch(DE)**
Erfinder: **Tusel, Günter,F.
Lieselottenstrasse 12
W-6650 Homburg/Saar(DE)**
Erfinder: **Ellinghorst, Guido
Lölsberg 102
W-5063 Overrath(DE)**

(74) Vertreter: **Dost, Wolfgang, Dr.rer.nat.,Dipl.-Chem. et al
Patent- & Rechtsanwälte Bardehle . Pagenberg . Dost . Altenburg . Frohwitter . Geissler & Partner Galileiplatz 1 Postfach 86 06 20
W-8000 München 86 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.5x/3.0.1)

## Beschreibung

Die Erfindung betrifft neue Polymere und ein Verfahren zur Herstellung solcher Polymere, die als Material für Lösungsdiffusionsmembranen geeignet sind. In anderer Hinsicht betrifft die Erfindung den Einsatz von solchen Lösungsdiffusionsmembranen für die Pervaporation.

Pervaporation ist ein Trennungsprozeß, bei dem ein aufzutrennendes Fluid, im allgemeinen ein Flüssigkeitsgemisch, mit einer ersten oder Beschickungsseite einer geeigneten Membran in Kontakt gebracht wird. Wenn an der zweiten oder Permeatseite der Membran die Dampf- Partialdrücke der Komponenten des Fluids oder der Flüssigkeit bei Werten gehalten werden, die kleiner sind als die entsprechenden Werte auf der ersten Seite, ergibt sich für die Wanderung dieser Komponenten durch die Membran eine Triebkraft. Die Komponenten treten so in Abhängigkeit von ihren jeweiligen Permeabilitäten mit unterschiedlichen Geschwindigkeiten durch, wobei die Permeationsgeschwindigkeit bzw. die Permeabilität in komplexer Weise von einer Anzahl unterschiedlicher Parameter abhängig ist. Zu diesen Parametern zählen z.B. die Art und die Konzentration der permeierenden Spezies, die Art und die Struktur der Membran, die Zusammensetzung des Fluids oder der Flüssigkeit, die Temperatur u. a. Da die Dampf-Partialdrücke auf der zweiten Seite der Membran niedriger sind als auf der ersten oder Beschickungsseite, verdampfen die Komponenten nach dem Durchtritt durch die Membran und bilden so ein dampfförmiges Permeat. Der Vorgang wird deshalb "Pervaporation" genannt. Aufgrund der unterschiedlichen Permeabilitäten der Komponenten des Fluids oder des Flüssigkeitsgemisches hat das Permeat eine andere Zusammensetung als das Fluid auf der Beschickungsseite, womit eine Auftrennung des Fluides in seine Komponenten erfolgt.

Unter der Voraussetzung, daß zwischen der Beschickungs- und Permeatsseite der Membran ein genügend hoher Unterschied in den Dampf-Partialdrücken aufrechterhalten wird, hängt die Trennleistung einer gegebenen Membran bezüglich eines gegebenen Beschickungsfluids nur von den Permeabilitäten der in Frage kommenden Komponenten ab. Für die Pervaporation können nur nichtporöse Membranen verwendet werden. Das bedeutet, daß die Membran keine durchgehenden Poren aufweist, die groß genug sind, daß das Fluid, insbesondere das Flüssigkeitsgemisch der Druckdifferenz folgend durch die Poren durch die Membran hindurchfließen kann. Es wird allgemein angenommen, daß die Löslichkeit einer Komponente in dem Membranmaterial zusammen mit dem Diffusionsverhalten den Massentransport über die Membran steuert. Die Pervaporation ist ein dynamischer Nichtgleichgewichts-Prozeß, bei dem Transportphänomene über die Trennleistung einer Membran entscheiden.

Das Verfahren der Pervaporation mit Hilfe von Membranen ist allgemein bekannt und wurde in der Literatur beschrieben (siehe S. K. Hwang, K. Kammermeyer, Membranes in Separation, John Wiley & Sons, New York 1975, R. Rautenbach, R. Albrecht, J. Membr. Sci.,7 (1980), G. Tusel, H. Brüschke, Desalination 53 (1985) J. Neell et al., Desalination 53, 1985 (297) und J.-P Brunn et al., J. Membrane Science 25 (1985) 55.

Da die Trennleistung einer zur Pervaporation eingesetzten Membran wie erwähnt von Transportphänomenen bestimmt wird, ist die Natur des zum Aufbau einer Membran verwendeten Materials von besonderer Bedeutung. Hierzu ist bekannt, daß gewisse Kunststoffe durch eine Behandlung mit physikalischen und chemischen Mitteln in ihren Eigenschaften so verändert werden können, daß sie eine besondere Eignung für den Einsatz in der Pervaporation erhalten. Ein solches Verfahren ist z. B. in DE-A 35 15 184.6 beschrieben, wobei homogene dichte Filme mit beschleunigten Elektronen bestrahlt und anschließend einer radikalischen Pfropfcopolymerisation mit Monomeren unterzogen werden, wobei mit Hilfe der Monomeren zur Salzbildung befähigte Gruppen in das Polymere eingeführt werden.

Das Polymere erhält damit Ionenaustauschereigenschaften und zeigt in der Salzform des Ionenaustausches besonders gute Selektivität zum Einsatz in der Pervaporation.

Membranmaterialien nach DE-A 35 15 184.6 verlieren bei einem unvermeidlichen Ionenaustausch allmählich ihre guten Eigenschaften in bezug auf hohe Selektivität und hohe Permeatflüsse. Membranen nach DE-A 35 14 184.6 sind deswegen zur Entwässerung wäßrig-organischer Flüssigkeitsgemische durch Pervaporation auf Dauer nicht einsetzbar.

Es ist eine Aufgabe der Erfindung, ein Polymer zur Verfügung zu stellen, das in Membranform mit verbesserten Eigenschaften zum Einsatz in der Pervaporation einsetzbar ist. Inbesondere sollen solche Membranen auch bei hoher Standzeit für die Pervaporation wasserhaltiger Gemische geeignet sein und gleichzeitig hohe Selektivität und Permeabilität für Wasser aufweisen. Es ist eine weiterer Aspekt der Erfindung, ein Verfahren zur Verfügung zu stellen, mit dem ein solches Polymer auf technisch leicht handhabbare Weise hergestellt werden kann.

Gegenstand der Erfindung ist ein Polymer wie es in den Ansprüchen definiert ist. Gegenstand der Erfindung ist weiterhin ein Verfahren zur Herstellung eines solchen Polymers und die Verwendung dieses

Polymers zur Herstellung einer für die Pervaporation geeigneten Polymermembran, wie es in den Ansprüchen definiert ist.

## Das Polymer

Das erfindungsgemäße Polymer ist ein Polymer mit einer Molekülhauptkette und ist dadurch gekennzeichnet, daß es in zumindest einer Seitenkette eine Betainfunktion aufweist. Bevorzugt hat das erfindungsgemäße Polymer eine Hauptkette der allgemeinen Formel I

$-(CR^1R^2-CR^3R^4)_n-$      (I)

wobei die Substituenten $R^1$ bis $R^4$,die gleich oder verschieden sein können, H-, Cl- oder F-Atome, Alkylgruppen oder substituierte, insbesondere halogensubstituierte Alkylgruppen mit vorzugsweise 1 bis 8 Kohlenstoffatomen, Arylgruppen oder substituierte, insbesondere halogensubstituierte Arylgruppen, mit vorzugsweise 6 bis 18 Kohlenstoffatomen, oder CN-Gruppen bedeuten, und n eine ganze Zahl ist, und ist dadurch gekennzeichnet, daß das Polymer mindestens eine Betainfunktion aufweist, die durch Pfropfung mit einem zur Bildung einer Betainfunktion befähigten Monomeren entstanden ist.

Im folgenden wird der Begriff Betainfunktion bzw Betainstruktur so verstanden, daß in dem erfindungsgemäßen Polymer zumindest ein negativ geladenes Zentrum und zumindest ein positiv geladenes Zentrum vorhanden sind, deren Ladungen sich insgesamt aufheben, so daß das Polymermolekül nach außen hin neutral erscheint. Das negative und das positive Zentrum besitzen dabei nicht wie bei einem Ionentauschersalz eine nur unwesentlich gehinderte freie Beweglichkeit, sondern sind fest, insbesondere z. B. über kovalente Bindungen, in das Polymermolekül eingebaut. Für eine solche Ladungsstruktur sind auch die Begriffe Zwitterion oder inneres Salz gebräuchlich.

## Grund- und Ausgangspolymer

Es ist nicht erforderlich, daß jede Einheit $-(CR^1R^2-CR^3R^4)-$ des Ausgangspolymeren in gleicher Weise mit Substituenten $R^1$ bis $R^4$ besetzt ist, vielmehr kann die Substituentenbesetzung im Polymermolekül variieren, d. h., die Ausgangspolymeren können Homopolymere und Copolymere sein.

Werden zum Aufbau des erfindungsgemäßen Polymers nur Kohlenstoff-, Wasserstoff-, Fluor- und Chloratome verwendet, so sind folgende Kombinationen dieser Atome besonders geeignet, wobei dies nur das Grundpolymere ohne die Betainstruktur charakterisiert:

$-H_2C-CH_2-$ , $-H_2C-CHCl-$ , $H_2C_2-CHF-$ , $-H_2C-CF_2-$ , $-F_2C-CF_2-$ , $-F_2C-CFCl-$ , $H_2C-CH(CH_3)-$ , $CHF-CF_2-$

Wenn zum Polymer-Molekülaufbau CN-Gruppen oder Alkylgruppen als die Substituenten $R^1$ bis $R^4$ verwendet werden, ist der Einsatz nur einer dieser Gruppen bevorzugt, wobei die anderen drei Substituenten von Wasserstoffatomen gebildet werden. Unter den Alkylgruppen ist die Methylgruppen besonders bevorzugt.

Eine geeignete halogenierte Alkylgruppe ist die $CF_3$-Gruppe. Bevorzugte Beispiele von Ausgangspolymeren sind: Polyethylen, Copolyere aus 90 - 99 Mol% Ethylen und 0.1 - 10 Mol% höherem Olefin von 4 - 8 Kohlenstoffatomen, insbesondere Hexen und Octen, Polypropylen, Polypropylen mit bis zu 10 Mol% Ethylencomonomer, Polyvinylchlorid, Polyvinylfluorid und Polyvinylidenchlorid, Polytetrafluorethylen,Polyvinylidendifluorid und Copolymere aus Polytetrafluorethylen und teil- oder perfluoriertem Ethylen und Propylen.

## Die Betainfunktion

Die zumindest eine Betainfunktion bzw Betaingruppe wird vorzugsweise von einem quaternären Stickstoffatom als positivem Zentrum und einer Säuregruppe als negativem Zentrum gebildet ,wobei sowohl das quaternäre Stickstoffatom als auch die Säuregruppe kovalent in das Polymer-Molekül eingebaut sind. Das quaternäre, positiv geladene Stickstoffatom kann folgende Bindungszustände aufweisen:

II:

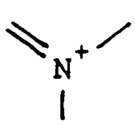

III:

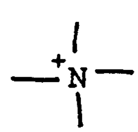

Im Falle des Bindungszustandes II ist das quaternäre Stickstoffatom bevorzugt ein heterocyclisches Stickstoffatom.

Bevorzugte Beispiele für geeignete Säuregruppen sind Carbonsäurereste und Sulfonsäurereste mit den folgenden funktionellen Gruppen:

IV

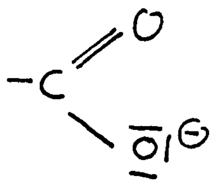

V

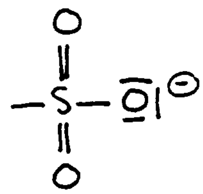

Besonders geeignete und deshalb bevorzugte Gruppen mit Betainfunktion sind im folgenden unter VI bis IX abgebildet.

VI

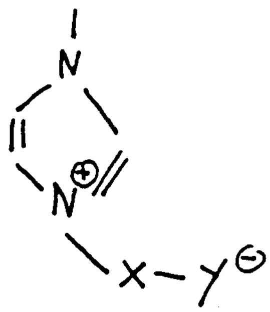

VII

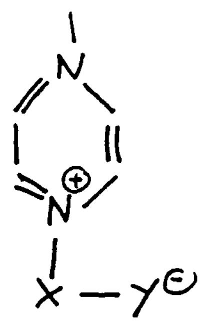

VIII

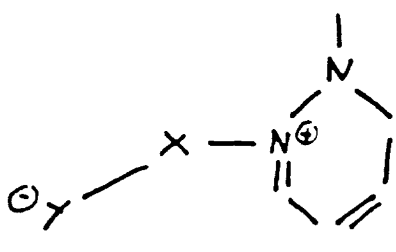

IX

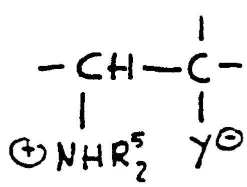

insbesondere

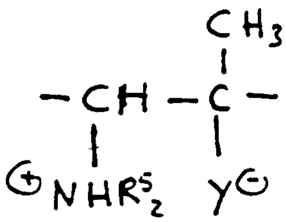

Dabei bedeutet die Gruppierung -X- eine Kohlenwasserstoffgruppe (Kohlenwasserstoffbrücke) mit 1 bis 10 Kohlenstoffatomen und -Y eine Säuregruppe, z.B. die Carboxylatgruppe IV oder die Sulfonatgruppe V.

Die Kohlenwasserstoffgruppe -X- ist bevorzugt eine verzweigte oder unverzweigte gesättigte aliphatische Gruppe mit 1 bis 10 Kohlenstoffatomen oder auch eine Alkarylgruppe, wie z. B. die Benzylgruppe.

$R^5$ in Struktur IX bedeutet eine Alkylgruppe mit vorzugsweise 1 - 5 Kohlenstoffatomen. Es können mehrere der Strukturelemente VI bis IX gleich oder verschieden hintereinander an (Strukturen VI bis VIII) bzw. in (Struktur IX) der Seitenkette angeordnet sein und eine solche Anordnung ist bevorzugt.

Die Vorteile des erfindungsgemäßen Polymers liegen darin, daß aufgrund des betainartigen Einbaus der positiven und negativen Ladung in das Gesamtmolekül eine freie Beweglichkeit der beiden Ladungsträger gegeneinander nicht mehr gegeben ist. Damit eignet sich das erfindungsgemäße Polymer in besonderer Weise als Material zum Aufbau einer Membran für die Pervaporation, weil ein Ionenaustausch im Membranmaterial durch die aufzutrennende Flüssigkeit während des Pervaporationsprozesses selbst dann ausgeschlossen ist, wenn das aufzutrennende Flüssigkeitsgemisch freie Protonen und Hydroxylionen enthält. Man erhält so Membranen für die Pervaporation, die eine wesentlich höhere Standzeit als die bekannten Membranen aufweisen. Der Nachteil der bekannten Membranen mit salzartigem Aufbau, daß man hohe Selektivität und hohe Flußraten der Permeation mit nur geringer Standzeit des Membranmaterials erkaufen muß, wird damit überwunden.

## Herstellung des Polymers

Gegenstand der Erfindung ist auch ein Verfahren zur Herstellung des erfindungsgemäßen Polymeren mit Betainfunktion. Bei diesem Verfahren wird ein Ausgangspolymer eingesetzt, das die allgemeine Formel I

$$-(CR^1R^2\text{-}CR^3R^4)_n\text{-} \qquad (I)$$

besitzt.

Für das erfindungsgemäße Verfahren besonders geeignete Ausgangspolymere sind Polyethylen (PE, Fp≈130°C), Polypropylen (PP, Fp≈180°C), Polyvinylchlorid (PVC, Fp≈ 180°C), Polyvinylfluorid (PVF, Fp≈185°C), Polyvinylidenfluorid ($PVF_2$, Fp≈170°C), Poly(tetrafluorethylenco- hexafluorpropen) (PFEP, Fp≈260°C), Poly(tetrafluorethylen) (PTFE, Fp≈330°C), Poly(chlortrifluorethylen) (PCTFE, Fp≈264°C) und Polyacrylnitril (PAN, Fp≈ 317°C), wobei Fp die Schmelztemperatur bedeutet. Polyvinylidenfluorid and Polyvinylfluorid sind dabei besonders bevorzugt.

In einer bevorzugten Ausführungsform werden Polymere in axial oder biaxial verstreckter Form als Ausgangspolymere eingesetzt. Hierdurch kann das Quellvermögen des erfindungsgemäßen Polymeren reduziert und die Formstabilität von daraus hergestellten Membranen erhöht werden.

## Die Bestrahlung

Bei dem erfindungsgemäßen Verfahren wird das Ausgangpolymer mit ionisierender Strahlung bestrahlt. Unter ionisierender Stahlung werden nachfolgend in dem Fachmann bekannter Weise alle energiereichen Strahlungsarten verstanden, mit denen es möglich ist, in einem organischen Molekül Radikale und/oder Radikalionen zu erzeugen. Solche energiereiche Strahlung kann Gammastrahlung, wie z. B. eine 60Co- $\gamma$ Strahlung oder eine $\beta$-Strahlung, d. h. eine Elektronenstrahlung sein. Für das erfindungsgemäße Verfahren wird bevorzugt eine Elektronenstrahlung verwendet, die durch Beschleunigung von Elektronen auf eine vorgewählte Energie erhalten wird. Die Dosisleistung sollte dabei mindestens 1 kGy * $s^{-1}$ betragen und bevorzugt im Bereich von 3 bis 50 kGy *$s^{-1}$ (0,3 bis 5 Mrd * $s^{-1}$) sein. Es können jedoch auch wesentlich

höhere Dosisleistung z. B. bis zu 5000 kGy * $s^{-1}$, wie sie leistungsstarke Elektronenbeschleuniger bei großtechnischen Anwendungen ermöglichen, angewendet werden.

Die angewandte Elektronenenergie hängt von der Form des zu bestrahlenden Materials, insbesondere von dessen Dicke ab, sollte jedoch mindestens 150 keV betragen.

Für das erfindungsgemäße Verfahren geeignete Strahlendosen können im Bereich von 10 bis 1000 kGy (1 bis 100 Mrd) liegen.

Das Pfropfen

Durch die Behandlung mit ionisierender Strahlung werden in dem Ausgangspolymer reaktive Zentren gebildet, mit denen es möglich ist, in einem nachfolgenden Verfahrensschritt Pfropfmomomere aufzupfropfen. Die reaktiven Zentren sind zumeist radikalische oder radikalionische Zentren, die eine so hohe Lebensdauer haben, daß für die Ausführung eines solchen nachgeschalteten Verfahrensschrittes genügend Zeit besteht. Das Aufpfropfen der Pfropfmonomeren wird nachfolgend als Pfropfreaktion bezeichnet.

Durch die Pfropfreaktion werden, in Abhängigkeit von der im ersten Verfahrensschritt erzeugten Gesamtzahl reaktiver Zentren, die Pfropfmonomeren an das bestrahlte Ausgangspolymer gebunden. An den dabei gebildeten Verzweigungsstellen kommt es in der Regel zu einer polymerisierenden Pfropfung, d.h. mehrere Moleküle des Pfropfmonomeren reagieren nacheinander, wobei die Pfropfmonomere kettenartig miteinander verknüpft werden. Durch die Pfropfung entsteht am Ausgangspolymeren somit eine vorher nicht vorhandene Seitenkette, die im folgenden als polymere Seitenkette bezeichnet wird. Die polymere Seitenkette kann homopolymer oder copolymerer Art sein.

Als Pfropfmonomere können Moleküle eingesetzt werden, die zu einer Pfropfreaktion mit dem jeweils verwendeten, bestrahlten Ausgangspolymer befähigt sind. Bevorzugt werden Pfropfmonomere mit einem Molekulargewicht von etwa 30 bis etwa 500 eingesetzt. Wenn die Pfropfreaktion über einen im wesentlichen radikalischen Mechanismus abläuft, sind zu einer radikalischen Pfropfreaktion befähigte Pfropfmonomere geeignet. Soweit es erwünscht ist, an eine durch die Bestrahlung geschaffene Verzweigungsstelle mehr als ein Pfropfmonomeres in vorstehend erläuterter Weise zu binden, sind als Pfropfmonomere polymerisierbare Verbindungen - bei einem radikalisch ablaufenden Reaktionsmechanismus radikalisch polymerisierbare Verbindungen - einsetzbar. Je nachdem, ob eine homopolymere oder eine copolymere Seitenkette erwünscht ist, wird zur polymerisierenden Pfropfreaktion nur eine Pfropfmonomerart oder ein Gemisch aus mehreren Pfropfmonomerarten eingesetzt.

Zur Pfropfreaktion befähigte Pfropfmonomere sind z.B. Monomere mit einer zur Polymerisation verwendbaren Doppelbindung. Geeignete Pfropfmonomere sind damit z.B. solche mit einer Vinylgruppe und insbesondere Derivate der Acrylsäure, jedoch auch der Methacrylsäure.

Da es das Ziel ist, durch die Pfropfreaktion zumindest eine Betainfunktion in das Ausgangspolymere einzuführen, müssen die Pfropfmonomeren neben ihrer Befähigung zur Pfropfreaktion zusätzlich entweder funktionelle Gruppen enthalten, die zumindest eine Betainfunktion bilden oder zumindest eine zur Bildung einer Betainfunktion geeignete funktionelle Gruppe enthalten, die im Anschluß an die Pfropfreaktion zu einer Betainfunktion umgewandelt wird. Nachfolgend wird der erste Verfahrensweg als einstufiges Verfahren, der zweite Verfahrensweg als mehrstufiges Verfahren bezeichnet. Erfindungsgemäß bevorzugt wird dabei das positive Zentrum der Betainfunktion durch ein quaternäres Stickstoff- oder Phosphoratom (Ammonium- oder Phosphoniumstruktur) und dessen negatives Zentrum durch einen Säurerest gebildet.

Die Wahl des Verfahrens richtet sich einerseits nach der Lebensdauer der durch die Bestrahlung im Ausgangspolymer geschaffenen reaktiven Zentren und andererseits nach der Zeit, die das verwendete Pfropfmonomere benötigt, um in das Ausgangspolymere einzudiffundieren und diese Zentren zu erreichen, um mit ihnen zu reagieren. Grundsätzlich ist es dabei erwünscht, das Ausgangspolymer über seine gesamte Ausdehnung zu durchpfropfen, um an jeder Stelle Material mit der gewünschten Qualität für die Pervaporation zu erhalten. Steht ein Pfropfmonomeres mit Betainfunktion zur Verfügung, das mit genügender Geschwindigkeit in das bestrahlte Ausgangspolymer eindiffundiert und hat das zu pfropfende bestrahlte Ausgangspolymer nur eine geringe Dicke, wird bevorzugt das einstufige Verfahren eingesetzt.

Steht dagegen - nach Maßgabe der Lebendauer der reaktiven Zentren und der Diffusionsgeschwindigkeit des Pfropfmonomeren im Ausgangspolymer - keine ausreichende Zeit zur Verfügung, um eine völlige Durchpfropfung zu erreichen, wird das mehrstufige Verfahren bevorzugt. Bei diesem Verfahren werden Pfopfmonomere eingesetzt, bei denen die Betainfunktion entweder noch nicht gebildet ist oder durch eine Schutzgruppe vorübergehend unwirksam gemacht wird. In beiden Fällen ist die Wirkung einer Betainfunktion nicht vorhanden, wodurch die hydrophoben Eigenschaften der Pfropfmonomeren und, als Folge davon, ihre Wanderungsgeschwindigkeit im bestrahlten Ausgangspolymer erhöht wird. Die völlig Durchpfropfung geht deshalb in entsprechend kürzerer Zeit vonstatten.

Einstufiges Verfahren

Beispiele von Pfropfmonomeren, die für das einstufige Verfahren geeignet sind, sind Aminosäuren mit einer olefinischen Doppelbindung, wie Vinylalanin oder entsprechend chemisch modifizierte Aminosäuren, wobei solche mit einer Vinylgruppe bevorzugt sind. Weitere Beispiele für Pfropfmonomere für ein einstufiges Verfahren sind 1-Vinyl-3-carboxymethylimidazol(betain) oder Derivate der Acrylsäure oder Methacrylsäure oder anderer Carbonsäuren mit einer Vinylgruppe, die peralkylierte Aminogruppen enthalten. Allgemein werden solche zur Pfropfreaktion befähigten Pfropfmonomeren mit Betainfunktion bevorzugt, bei denen das positive Zentrum der Betainfunktion von einem quaternären Stickstoffatom und das negative Zentrum von einem Säurerest gebildet wird. Der Säurerest kann z. B. eine Sulfonatgruppe oder eine Phosphonatgruppen sein. Außer von einem quaternären Stickstoffatom kann das positive Zentrum auch von einem quaternären Phophoratom (Phosphoniumgruppe) gebildet werden.

Mehrstufiges Verfahren

Auch beim mehrstufigen Verfahren wird die Betainfunktion bevorzugt insgesamt durch ein quaternäres Stickstoffatom als positives Zentrum und einen Säurerest als negatives Zentrum gebildet.

Eine erste Variante des mehrstufigen Verfahrens besteht darin, mit einem Pfropfmonomeren zu pfropfen, das eine zur Pfropfreaktion befähigte Doppelbindung, ein Stickstoffatom und eine Säuregruppe hat, wobei die Säuregruppe jedoch eine Schutzgruppe in dem Sinne trägt, daß sie verestert ist. In dieser Form hat das Monomere eine erhöhte Hydrophobie und damit, wie vorstehend beschrieben, eine erhöhte Diffusionsgeschwindigkeit in dem bestrahlten Ausgangspolymer. Nach durchgeführter Pfropfreaktion wird die veresterte Säuregruppe verseift und das Stickstoffatom quaterniert. Beispiele von Monomeren, die für die erste Variante des mehrstufigen Verfahrens geeignet sind, sind Ester der aminierten Acrylsäure oder Methacrylsäure.

Bei einer zweiten Variante des mehrstufigen Verfahrens wird mit Monomeren gepfropft, die eine funktionelle Gruppe aufweisen, die sich zu einer Folgereaktion eignet, mit der die Betainfunktion gebildet wird. Dies kann z.B. dadurch verwirklicht werden, daß man als funktionelle Gruppe am Pfropfmonomeren ein Stickstoffatom vorsieht, mit dem ein Alkylierungsmittel unter Quaternierung dieses Stickstoffatoms (Ammoniumstruktur) reagiert, wobei das Alkylierungsmittel gleichzeitig eine negativ geladenen Gruppe (bevorzugt einen Säurerest) aufweist. Da die Quaternierung des Stickstoffatoms eine positive Ladung ergibt, die als positives Zentrum der Betainfunktion dienen kann, erhält man somit zusammen mit der negativen Ladung der eingeführten Gruppe die Betainfunktion. Besonders bevorzugt sind dabei Stickstoffatome enthaltende heterocyclische Propfmonomere. Als quaternierende, eine negative Gruppe tragende Alkylierungsmittel eignen sich halogenierte, bevorzugt chlorierte oder bromierte aliphatische Carbonsäuren, bzw. deren Salze und Ester, wobei in diesem Falle die eingeführte negative Gruppe eine Carboxylatgruppe ist. Bei Einsatz von Estern solcher halogenierter Carbonsäuren ist eine nachfolgende Verseifung erforderlich, um die Carboxylatgruppe freizusetzen, oder die quaternierende Alkylierung wird unter verseifenden Bedingungen durchgeführt. Neben aliphatischen Carbonsäuren sind auch Benzoesäuren mit einer halogenierten Alkylgruppe am aromatischen Kern, wie z. B. p-Chlormethylbenzoesäure oder p- Brommethylbenzoesäure oder deren Salze und Ester geeignet. Die negativ geladene Gruppe des Alkylierungsmittels kann auch eine Sulfonatgruppe sein. In diesem Falle arbeitet man mit halogenierten aliphatischen Sulfonsäuren oder deren Salzen. Weiterhin sind cyclische Ester von aliphatischen Sulfonsäuren, sogenannte Sultone, geeignet.

Die vorstehend erläuterten quaternierenden Alkylierungsmittel haben bevorzugt von 1 bis 10 Kohlenstoffatome. Von den aufgezeigten Verfahrensvarianten wird die zweite Variante des mehrstufigen Verfahrens bevorzugt, wobei es besonders bevorzugt ist, Pfropfmonomere mit einem Stickstoffatom als funktionelle Gruppe zu verwenden und das Stickstoffatom unter Einführung einer negativen Gruppe zu quaternieren. Das Stickstoffatom kann dabei im Bindungszustand X oder XI sein, wobei die Strichelung in XI andeuten soll, daß es sich auch um einen heterocyclischen Einbau handeln kann.

X

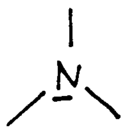

XI

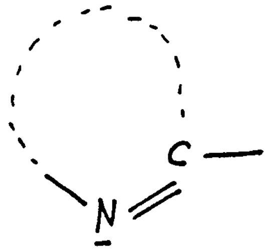

Insbesondere können beim mehrstufigen Verfahren mit Betainvorläufern versehene substituierte oder unsubstituierte Olefine, vorzugsweise 1-Olefine zum Anhängen an Kohlenstoffatome des Grundpolymers verwendet werden.

Für die zweite Variante des mehrstufigen Verfahrens geeignete Monomere haben damit die in XII und XIII gezeigten Strukturelemente bzw. funktionelle Gruppen, wobei Z jeweils ein die olefinische Doppelbindung und das Stickstoffatom verbrückender organischer Rest ist und R Wasserstoff oder eine aliphatische Gruppe mit 1 bis 3 Kohlenstoffatomen bedeutet. Der Bindungszustand des Stickstoffatoms in Struktur XIII entspricht dabei XI, und der heterocyclische Einbau der Stickstoffatoms ist bevorzugt.

XII

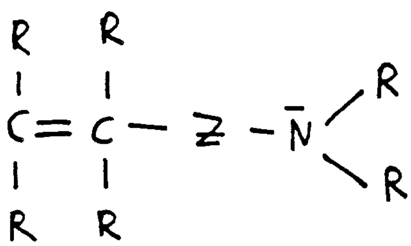

XIII

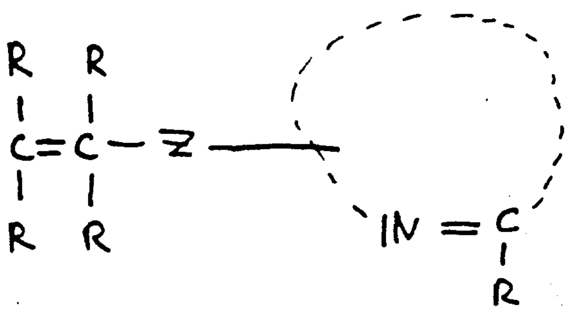

Besonders geeignete Monomere für die zweite Variante des mehrstufigen Verfahrens sind 2-Vinylpyridin, 4- Vinylpyridin und N-Vinylimidazol. Geeignete Alkylierungsmittel sind z. B. halogenierte Carbonsäuren bzw. deren Salze, wie Chloressigsäure, Bromessigsäure, 4-(Brommethyl)-benzoesäure, 2-Brompropionsäure, 3-Brompropionsäure, halogenierte Carbonsäureester, wie z. B. Bromessigsäuremethylester, Sultone, wie $\gamma$-Propansulton, $\delta$-Hexansulton, und halogenierte Sulfonsäuren bzw. deren Salze wie 1-Bromethansulfonsäure-Natrium-Salz und 4-(Brommethyl)-benzolsulfonsäure. Pfropft man das Ausgangspolymer z. B. mit N-Vinylimidazol und arbeitet mit Bromessigsäure als Alkylierungsmittel so entsteht ein Betain der Struktur XIV. Führt man die Pfropfungsreaktion dagegen mit 4-Vinylpyridin als Monomerem und $\gamma$-Propansulton durch, so entsteht eine Betainfunktion mit der Struktur XV.

XIV

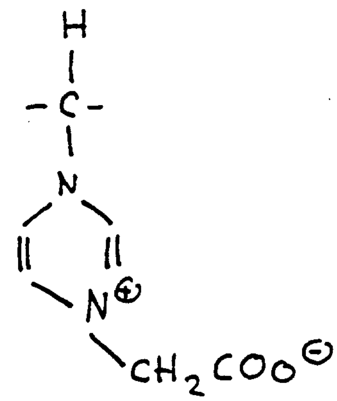

XV

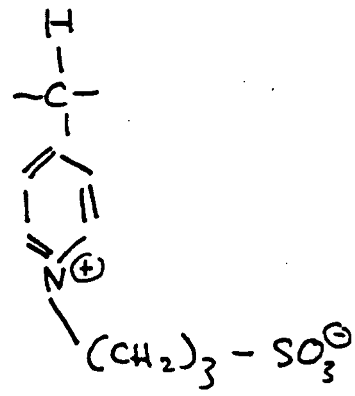

Das bestrahlte Ausgangspolymere wird nach einer gewissen Wartezeit nach Bestrahlungsende mit dem Propfmonomeren oder mit einem Gemisch aus mehreren Pfropfmonomeren in vorzugsweise allseitigen Kontakt gebracht. Ein Gemisch aus mehreren Pfropfmonomeren wird dann verwendet, wenn eine copolymere Seitenkette erwünscht ist. Eine geeignete Kontaktzeit liegt im Bereich von 1 Minute bis 60 Stunden, bevorzugt im Bereich von 10 Minuten bis 120 Minuten. Die Pfropfmonomeren können in reiner Form oder in einem Lösungsmittel eingesetzt werden, wobei bevorzugte Pfropfmonomerkonzentrationen im Bereich von 20 bis 80 Gewichtsprozent liegen. Für die besonders bevorzugten Pfropfmonomeren 2-Vinylpyridin, 4-Vinylpyridin, N-Vinylimidazol und N,N-Dimethylaminoethylmethacrylat eignen sich als Lösungsmittel Ethanol, Wasser und Wasser/Ethanol-Gemische.

Geeignete Temperaturen zur Durchführung der Pfropfreaktion sind Temperaturen zwischen 30°C und 80°C, inbesondere zwischen 50°C und 70°C. Gegebenenfalls wird das Monomere oder das Gemisch von Monomeren vorher temperiert.

Bevorzugt werden die Bedingungen der Pfropfreaktion so lange aufrechterhalten, bis das bestrahlte Ausgangspolymere über seine ganze Ausdehnung gepfropft ist. Die hierzu erforderliche Zeit hängt von einer Reihe von Parametern ab, die in DE-A 35 15 184.6 - auf die hier ausdrücklich Bezug genommen wird - näher beschrieben sind. Zu diesen Verfahrensparametern gehören die Stahlendosis, die Wartezeit zwischen Bestrahlung und Kontaktieren mit dem oder den Monomeren, die Verfahrenstemperatur und die eingesetzten Monomerkonzentrationen. Zur Erreichung eines Endproduktes von homogener Qualität ist eine völlige Durchpfropfung des Ausgangspolymeren besonders erwünscht. Das gewünschte Ergebnis läßt sich mit Hilfe der Differential-Interferenz-Kontrast-Mikroskopie an Dünnschnitten des gepfropften Materials kontrollieren. Es hat sich als zweckmäßig erwiesen, den Eintritt der Durchpfropfung an Probestücken mittels dieses Verfahrens empirisch zu bestimmen.

Der Pfropfgrad des so erhaltenen gepfropften Ausgangspolymeren liegt im allgemeinen zwischen 20 und 300%. Zur Bestimmung des Pfropfgrades wird ein Probestück bis zur Gewichtskonstanz getrocknet und der Pfropfgrad (PG) nach der Gleichung

$$PG = \frac{m - m_o}{m_o} * 100\ (\%)$$

bestimmt, wobei m die Masse des gepfropften Probestücks und $m_o$ die Masse des ungepfropften Probestücks darstellen.

Im Falle der zweistufigen Verfahrensvarianten schließt sich an die Pfropfreaktion die Umwandlung der funktionellen Gruppe des Monomeren zu einer Betainfunktion an. Bevorzugt erfolgt jedoch davor eine Extraktion des gepfropften Ausgangspolyolefins mit polaren Lösungsmitteln wie z. B. Wasser, Ethanol oder Wasser/Ethanol-Gemischen zur Reinigung von Monomerresten oder von durch Übertragungsreaktionen gebildetem Polymerisat, das nicht durch Pfropfung an das Ausgangspolymere gebunden ist.

Von den bereits genannten Alkylierungsmitteln, die sich zur quaternierenden Alkylierung eines Stickstoffatoms im Monomeren unter Einführung eines negativen Säurerestes eignen, sind Bromessigsäure,

Chloressigsäure,
δ-Hexansulton und γ-Propansulton besonders geeignet. Allgemein werden die Alkylierungsmittel bevorzugt als Lösungen eingesetzt, wobei die Konzentration des Alkylierungsmittels im Bereich von 0,1 bis 20 Gewichtsprozent, vorzugsweise im Bereich von 1 bis 5 Gewichtsprozent liegt. Als Lösungsmittel können organische Lösungsmittel, bevorzugt polare organische Lösungsmittel eingesetzt werden. Geeignete Lösungsmittel sind z. B. Methanol, Dimethylformamid, Nitromethan, Dimethylsulfoxid und 95%iges Ethanol. Die Umsetzung erfolgt durch allseitiges in Kontakt bringen, z. B. Eintauchen des gepfropften Ausgangspolymer-Reaktionskörpers in eine Lösung des Alkylierungsmittels. Zur Durchführung der Umsetzung sind Temperaturen zwischen 20°C und 110°C, vorzugsweise zwischen 60°C und 90°C geeignet, wobei Reaktionszeiten von einer Minute bis 60 Stunden, vorzugsweise 5 Minuten bis 30 Stunden angewendet werden.

Bei Einsatz von halogenierten Alkylierungsmitteln wird die Bildung der Betainfunktion durch abschließendes Kontaktieren der Probekörper,insbesondere der Membran, mit alkalischen Lösungen, wie z. B. 0,1 bis 10%ige Natron- oder Kalilauge, bevorzugt 1 bis 5%ige Natronlauge, abgeschlossen, wobei Halogenwasserstoffsäuren aus der Membran entfernt werden.

Der Anteil der durch die Reaktion im Pfopfpolymeren umgesetzten funktionellen Gruppen beträgt je nach Reaktionsbedingungen zwischen 1% und 100%, bevorzugt mehr als 40%.

## Membran und Membranherstellung

Erfindungsgemäß kann das vorstehend beschriebene Verfahren mit Vorteil zur Herstellung einer Polymermembran verwendet werden, die als Lösungs-Diffusionsmembran hervorragend für die Pervaporation inbesondere wasserhaltiger Gemische geeignet ist und gleichzeitig hohe Selektivität und Permeabilität für Wasser besitzt.

Erfindungsgemäß finden dabei als Ausgangspolymere für die Pfropfung synthetische Polymere Verwendung, die durch einen geeigneten Prozeß zu dünnen Filmen verarbeitet werden können und bei Raumtemperatur teilkristallin sind oder sich unterhalb ihrer Glasübergangstemperatur befinden. Geeignete Prozesse sind das Schmelzextrudieren, Schälen oder Gießen. Bevorzugt werden homogene, dichte und/oder gesinterte Filme mit einer Dicke von 1 µm bis 1 mm, vorzugsweise 5 bis 200 µ m, besonders bevorzugt 8 bis 100 µm verwendet. Erfindungsgemäß geeignete Polymere sind insbesondere solche, die Dauerbeständigkeit gegenüber siedendem Ethanol aufweisen, wobei unter Dauerbeständigkeit verstanden wird, daß die Polymerfilme beim Kochen in Ethanol für 10 Stunden oder darüber keine wesentliche Änderung erfahren und durch diese Behandlung in ihrer Formstabilität nicht beeinträchtigt werden. Für die Erfindung geeignete Polymere sind Polyethylen (PE, Fp≈130°C), Polypropylen (PP, Fp≈180°C isotaktisches PP), Polyvinylchlorid (PVC, Fp≈180°C), Polyvinylfluorid (PVF, Fp≈ 185°C), Polyvinylidenfluorid ($PVF_2$, Fp≈170°C), Poly-(tetrafluorethylen-co-hexafluorpropen) (PFEP, Fp≈260°C), Poly(tetrafluorethylen) (PTFE, Fp≈330°C), Poly-(chlortrifluorethylen) (PCTFE, Fp≈220°C), Polytetrafluorethylen-co-ethylen) (PCTFE/E, Fp≈264°C) und Polyacrylnitril (PAN, Fp≈ 317°C). Dabei sind Filme aus teilfluorierten Polymeren, insbesondere aus Polyvinylidenfluorid und Polyvinylfluorid besonders bevorzugt.

In einer bevorzugten Ausführungsform sind die Polymerfilme axial oder biaxial verstreckt, was sich vorteilhaft auf das Quellverhalten der hergestellten Membran auswirkt.

Die Bestrahlung der Polymerfilme erfolgt in der bereits beschriebenen Weise mit ionisierender Strahlung, wobei Elektronenenergien von mindestens 150keV, eine Dosisleistung von 3 bis 20 $kGy * s^{-1}$ und eine Gesamtstrahlendosis von 20 bis 250 kGy besonders bevorzugt sind. Die Bestrahlung erfolgt entweder in Luft oder vorzugsweise in einer Inertgasatmosphäre mit einer $O_2$-Konzentration ≦ 100 ppm.

Die Pfropfreaktion kann über die ganze Dicke des eingesetzten Polymerfilms oder nur in Teilbereichen davon erfolgen. Eine Pfropfung in Teilbereichen kann von Interesse sein, wenn eine Membran erwünscht ist, die sich in ihren Eigenschaften über die Dicke verändert. Für die Mehrheit der Anwendungen wird jedoch eine völlige Durchpfropfung erwünscht sein, und diese Arbeitsweise ist bevorzugt.

## Pervaporationsverfahren

Die erfindungsgemäße Polymermembran eignet sich insbesondere für Pervaporationsverfahren, bei denen kleine, einem Fluid zugesetzte organische Moleküle unter Verwendung einer Membran, durch die die Moleküle selektiv hindurchtreten, kontinuierlich aus dem Fluid abgetrennt werden, wobei die Abtrennung der Moleküle durch Kondensieren der Moleküle durch Kühlung und/oder Anwendung von vermindertem Druck erfolgt. Eine Ausführungsform des Erfindungsgegenstandes ist daher ein Pervaporationsverfahren. Bei diesem wird eine zu trennende Flüssigkeit durch eine Zufuhrkammer geleitet, die von einer Permeatkammer durch eine Pervaporationsmembran getrennt ist. Von der Permeatkammer wird Permeat abgeführt, vorzugsweise durch Kondensation, wobei das Permeat eine wesentlich andere Zusammensetzung als das zugeführte Gemisch hat. Das erfindungsgemäße Verfahren ist dadurch gekennzeichnet, daß als Pervaporationsmembran eine der oben definierten Membranen mit Polymeren mit Betainfunktion verwendet wird.

Die Erfindung wird durch die nachfolgenden Beispiele weiter erläutert.

Bestimmung der Trenneigenschaften (Trennfaktor im Standard-Pervaporationstest

Die Trenneigenschaften der erfindungsgemäß hergestellten Membranen wurden an einem Pervaporations- Labormeßstand ermittelt. De Zulauf, im Standard- Pervaporationstest eine 80/20 (Gew.-%)-$EtOH/H_2O$ Mischung, wurde mit etwa 70°C über die Membran gepumpt. Auf der Permeatseite wurde mit Hilfe einer Membranpumpe ein Unterdruck von < 40 mbar erzeugt. Das Permeat wurde in Kühlfallen aufgefangen, gewogen und gaschromatographisch analysiert. Der Gesamtfluß $\Phi$ wurde in kg $m^{-2}h^{-1}$, und der Trennfaktor $\alpha$ gemäß der Formel

$$\alpha = \frac{C^{P}_{H_2O}}{C^{Z}_{H_2O}} \times \frac{C^{Z}_{EtOH}}{C^{P}_{EtOH}}$$

(mit C = Konzentration (Gew.-%), Z = im Zulauf und P = im Permeat) berechnet.

Bestimmung der Eindringtiefen der Pfropfung in den Polymerfilm

Die Eindringtiefe der Pfropfung, insbesondere ob und unter welchen Bedingungen die Polymerfilme durchgepfropft sind oder werden, wurde mit Hilfe der Differential-Interferenz-Kontrast-Mikroskopie (DIKM) an Dünnschnitten von Probemembranen überprüft.

Beispiel 1:

Ein schmelzextrudierter, biaxial verstreckter Polymerfilm aus Polyvinylfluorid (PVF) von 15 $\mu$m Dicke wird bei Raumtemperatur in $N_2$-Atmosphäre ($O_2$-Konzentration ≦ 100 ppm) mit 160-keV-Elektronen bei einer Dosisleistung $D_L$ = 12 $kGys^{-1}$ (1,2 Mrd $s^{-1}$) bis zu einer Gesamtdosis D = 36 kGy (3,6 Mrd) bestrahlt.

Etwa 2 Minuten nach Bestrahlungsende wird der bestrahlte PVF-Film für 95 Minuten in eine auf 65°C thermostatiertes Monomerbad, bestehend aus reinem N-Vinylimidazol, eingetaucht und über die gesamte Filmdicke gepfropft. Die Durchpfropfung wurde mit Hilfe der vorgenannten DIKM-Methode überprüft. Danach wird der gepfropfte PVF-Film 16 h mit einem Gemisch aus Ethanol/$H_2O$ unter Rückfluß extrahiert und 16 h bei 50°C unter reduziertem Druck getrocknet.

Der Pfropfgrad wird gravimetrisch zu PG = 110% ermittelt. Die Bildung der Betainfunktion geschieht in 5%-iger Lösung von Bromessigsäure in 95%-igem Ethanol bei 80°C mit 1 h Reaktionsdauer. Die umgesetzte Pfropfpolymerprobe wird kurz in $H_2O$ extrahiert und danach 0,5 h in 1%-ige Natronlauge gelegt. Der Film wird kurz mit Wasser abgespült und 16 h bei 50°C unter reduziertem Druck getrocknet. Gravimetrisch wird ein Umsetzungsgrad von 45% der Imidazol-Gruppen festgestellt. Im Standard-Pervaporationstest liefert die fertige PVF-g-VIA-Membran 6,1% Ethanol im Permeat, entsprechend einem Trennfaktor von $\alpha \approx 59$, und einem Gesamtpermeatfluß von $\Phi \approx 1{,}4$ kg $m^{-2}h^{-1}$. Die Membrandicke beträgt 34 $\mu$m.

Beispiel 2:

Ein schmelzextrudierter, biaxial verstreckter Polymerfilm aus Polyvinylfluorid (PVF) von 15 $\mu$m Dicke wird bei Raumtemperatur in $N_2$-Atmosphäre ($O_2$-Konzentration ≦ 100 ppm) mit 160 keV-Elektronen bei einer Dosisleistung $D_L$ = 8 kGY $s^{-1}$ (0,8 Mrd $s^{-1}$) bis zu einer Gesamtdosis D = 21 kGy (2,1 Mrd) bestrahlt.

Die Pfropfung erfolgt wie in Beispiel 1, jedoch mit 4-Vinylpyridin bei 67°C mit einer Reaktionsdauer von 101 min. Der Pfropfgrad beträgt 253%. Die Bildung der Betainfunktion erfolgt wie in Beispiel 1. Der Umsetzungsgrad mit Bromessigsäure geträgt 51% der Pyridin-Gruppen. Im Standard-Pervaporationstest liefert die fertige PVF-g-4-VPY-Membran 5,4% Ethanol im Permeat, entsprechend einem Trennfaktor von 68, und einen Permeatfluß von $\Phi \approx 2{,}1$ kg $m^{-2}h^{-1}$. Die Membrandicke beträgt 71 µm.

Beispiel 3:

Ein schmelzextrudierter, unverstreckter Polymerfilm aus Polyvinylidenfluorid ($PVF_2$) von 25 µm Dicke wird wie in Beispiel 1 bestrahlt, jedoch bis zu einer Gesamtdosis von 75 kGy (7,5 Mrd).

Die Pfropfung erfolgt wie in Beispiel 1, jedoch mit 4-Vinylpyridin als Pfropfmonomer bei 69°C mit einer Reaktionsdauer von 55 min. Der Pfropfgrad beträgt 37%. Die Bildung der Betainfunktion erfolgt in 5%-iger Lösung von $\gamma$-Propansulton in 95%-igem Ethanol bei ≈ 75°C mit 30 min Reaktionsdauer. Danach wird die Probe kurz in Ethanol extrahiert und 16 h bei 50°C unter reduziertem Druck getrocknet. Der Umwandlungsgrad zur Betainfunktion beträgt > 95% der Pyridin-Gruppen.

Im Pervaporationsexperiment wurde, abweichend von den Standardtestbedingungen, eine Zulaufmischung mit 94,8% Ethanol und 5.2% Wasser verwendet. Die fertige $PVF_2$-g-4-VPY-Membran liefert dabei 4,1% Ethanol im Permeat, entsprechend einem Trennfaktor von $\alpha \approx 430$, und einen Permeatfluß von 0,07 kg $m^{-2}h^{-1}$. Die Membrandicke beträgt 50 µm.

Beispiel 4:

Ein schmelzextrudierter, unverstreckter Polymerfilm aus Polyvinylidenfluorid (PVF2) von 25 µm Dicke wird wie in Beispiel 1 bestrahlt, jedoch mit einer Dosisleistung von 3 kGy $s^{-1}$ (0,3 Mrd $s^{-1}$) und einer Gesamtdosis von 18 kGy (1,8 Mrd).

Die Pfropfung erfolgt wie in Beispiel 1, jedoch mit 4-Vinylpyridin als Pfropfmonomer bei 70°C mit einer Reaktionsdauer von 55 min. Der Pfropfgrad beträgt 31,3%. Die Bildung der Betainfunktion erfolgt wie in Beispiel 1 mit Bromessigsäure, jedoch mit einer Reaktionszeit von 120 min. Nach der Umsetzung wurde, abweichend von Beispiel 1, eine Behandlung der umgesetzten $PVF_2$-g-4-VPY-Membran in 5%-iger Kalilauge mit einer Verweilzeit von 10 min. vorgenommen. Der Umwandlungsgrad zur Betainfunktion beträgt > 95% der Pyridin- Gruppen.

Im Standard-Pervaporationstest liefert die fertige $PVF_2$-g-4-VPY-Membran 1,9% Ethanol im Permeat, entsprechend einem Trennfaktor von $\alpha \approx 215$, und einen Permeatfluß von 0,47 kg $m^{-2}h^{-1}$. Die Membrandikke beträgt 35 µm.

Beispiel 5:

Ein schmelzextrudierter, biaxial verstreckter Polymerfilm aus Polyvinylidenfluorid ($PVF_2$) von 9 µm Dicke wird wie in Beispiel 1 bestrahlt, jedoch mit einer Gesamtdosis von 53 kGy (5,3 Mrd.).

Die Pfropfung erfolgt wie in Beispiel 1, jedoch mit 4-Vinylpyridin als Pfropfmonomer bei 80°C mit einer Reaktionsdauer von 70 min. Der Pfropfgrad beträgt 45%. Die Bildung der Betainfunktion erfolgt wie in Beispiel 1. Der Umwandlungsgrad zur Betainfunktion beträgt 90% der Pyridin-Gruppen.

Im Standard-Pervaporationstest liefert die fertige PVF2-g-4-VPY-Membran 4,25 Ethanol im Permeat, entsprechend einem Trennfaktor von $\alpha \approx 91$, und einen Permeatfluß von 0,25 kg $m^{-2}h^{-1}$. Die Membrandikke beträgt 15 µm.

**Patentansprüche**

**1.** Polymer mit einer Molekül-Hauptkette der allgemeinen Formel I

$$-(CR^1R^2-CR^3R^4)_n- \qquad (I)$$

wobei die Substituenten $R^1$ bis $R^4$, die gleich oder verschieden sein können, H-, Cl- oder F-Atome, Alkylgruppen oder substituierte, insbesondere halogenierte Alkylgruppen, mit vorzugsweise 1 - 8 Kohlenstoffatomen, Arylgruppen oder substituierte, insbesondere halogensubstituierte Arylgruppen, mit vorzugsweise 6 - 18 Kohlenstoffatomen oder CN-Gruppen bedeuten, und n eine ganze Zahl ist, dadurch gekennzeichnet, daß das Polymer mindestens eine Betainfunktion aufweist, die durch Pfropfung mit einem zur Bildung einer Betainfunktion befähigten Monomeren entstanden ist.

2. Polymer nach Anspruch 1, dadurch gekennzeichnet, daß die Betainfunktion von zumindest einem quaternären Stickstoffatom als positivem Zentrum der Betainfunktion und zumindest einer Säuregruppe als negativem Zentrum der Betainfunktion gebildet wird.

3. Polymer nach Anspruch 2, dadurch gekennzeichnet, daß die Säuregruppen von Sulfonsäureresten oder Carbonsäureresten gebildet werden.

4. Polymer nach Anspruch 2, dadurch gekennzeichnet, daß das zumindest eine quaternäre Stickstoffatom ein heterocyclisches Stickstoffatom ist.

5. Polymer nach einem der vorhergehenden Ansprüche, dadurch gekennzeichnet, daß die Betainfunktion eine der folgenden Strukturen aufweist:

VI:

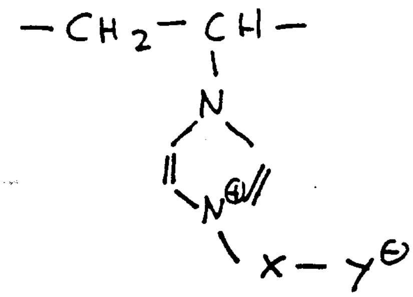

VII:

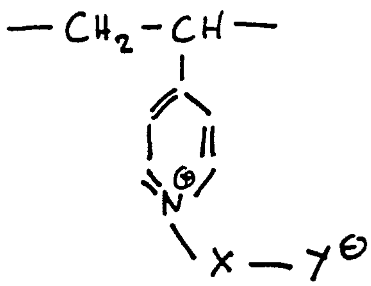

VIII:

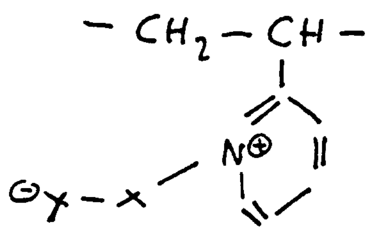

IX:

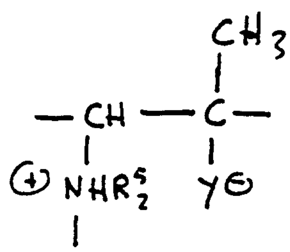

6. Verfahren zur Herstellung eines Polymeren gekennzeichnet durch die folgenden Verfahrensschritte:

(a) Bestrahlen eines Ausgangspolymeren der allgemeinen Formel I

$-(CR^1R^2-CR^3R^4)_n-$, (I)

wobei die Substituenten $R^1$ bis $R^4$, die gleich oder verschieden sein können, H-, Cl- oder F-Atome, Alkylgruppen oder substituierte, insbesondere halogensubstituierte Alkylgruppen, mit vorzugsweise 1 - 8 Kohlenstoffatomen, Arylgruppen oder substituierte, insbesondere halogensubstituierte Arylgruppen mit vorzugsweise 6 - 18 Kohlenstoffatomen oder CN-Gruppen bedeuten, und n eine ganze Zahl ist, mit ionisierender Strahlung;

(b) Behandeln des bestrahlten Ausgangspolymeren mit einem zur Pfropfreaktion befähigten Monomeren oder Monomerengemisch wobei das Monomere oder die Monomeren des Gemisches

(c1) entweder funktionelle Gruppen enthalten, die zumindest eine Betainfunktion bilden,

(c2) oder zumindest eine zur Bildung einer Betainfunktion geeignete funktionelle Gruppe enthalten, die im Anschluß an die Pfropfreaktion zu einer Betainfunktion umgewandelt wird.

**7.** Verfahren nach Anspruch 6, dadurch gekennzeichnet, daß man als Ausgangspolymer Polyethylen, Polypropylen, Polyvinylfluorid, Polyvinylidenfluorid, Polytetrafluorid, Polyvinylchlorid, Polyvinylidenchlorid oder ein Copolymer von Polyethylen, Polypropylen und halogenierten Polyolefinen einsetzt.

**8.** Verfahren nach einem der Ansprüche 6 oder 7, dadurch gekennzeichnet, daß man in Schritt (b) zu einer radikalischen Pfropfreaktion befähigte Monomere einsetzt.

**9.** Verfahren nach Anspruch 6 bis 8, dadurch gekennzeichnet, daß man in Schritt (b) Monomere mit einer pfropfbaren C-C-Doppelbindung und einem quaternierbaren Stickstoffatom einsetzt, und daß man in Schritt (c2) das quaternierbare Stickstoffatom unter Bildung des positiven Zentrums der Betainfunktion mit einem alkylierenden Reagens alkylierend quaterniert, wobei das alkylierende Reagens zur Bildung des negativen Zentrums der Betainfunktion eine funktionelle Gruppe mit Säurecharakter (Säuregruppe) aufweist.

**10.** Verfahren nach Anspruch 9, dadurch gekennzeichnet, daß man Monomere mit einem heterocyclischen quaternierbaren Stickstoffatom einsetzt.

**11.** Verfahren nach Anspruch 10, dadurch gekennzeichnet, daß man ein alkylierenden Reagens einsetzt, dessen funktionelle Gruppe mit Säurecharakter von einem Carbonsäurerest, einem Carbonsäuteesterrest, einem Sulfonsäurerest, oder einem Sulfonsäureesterrest mit 1 bis 10 Kohlenstoffatomen gebildet wird, wobei im Falle eines Esterrestes der Esterrest während oder nach Schritt (C) verseift wird.

**12.** Verfahren nach einem der Ansprüche 9 bis 11, dadurch gekennzeichnet, daß man als Monomere mindestens eine Verbindung aus der Gruppe 2- Vinylpyridin, 4-Vinylpyridin und N-Vinylimidazol einsetzt.

**13.** Verfahren nach Anspruch 12, dadurch gekennzeichnet, daß man als alkylierendes Reagens eine halogenierte Carbonsäure mit 1 bis 10 Kohlenstoffatomen oder eine Salz davon, einen halogenierten Carbonsäureester mit bezüglich der Carbonsäure 1 bis 10 Kohlenstoffatomen, eine halogenierte Sulfonsäure mit 1 bis 10 Kohlenstoffatomen oder ein Salz davon, oder einen cyclischen Sulfonsäureester mit 2 bis 10 Kohlenstoffatomen einsetzt.

**14.** Verfahren nach Anspruch 13, dadurch gekennzeichnet, daß man als alkylierendes Reagens eine Verbindung aus der Gruppe Chloressigsäure, Bromessigsäure, 4-(Brommethyl)benzoesäure, 2-Brompropionsäure, 3-Brompropionsäure, 1-Brommethansulfonsäure, 4-(Brommethyl)benzolsulfonsäure, ein Natrium-, Kalium- oder Ammoniumsalz einer der vorgenannten Säuren, Bromessigsäuremethylester, $\gamma$-Propansulton oder $\delta$-Hexansulton einsetzt.

**15.** Verfahren nach einem der Ansprüche 6 bis 8, dadurch gekennzeichnet, daß man in Schritt (b) eine funktionelle Gruppe mit Säurecharakter tragende Monomere mit einer olefinischen Kohlenstoff-Kohlenstoff-Doppelbindung und einem quaternierbaren Stickstoffatom einsetzt.

16. Verfahren nach Anspruch 15, dadurch gekennzeichnet, daß man Monomere einsetzt, deren funktionelle Gruppe mit Säurecharakter von einem Carbonsäurerest, einem Carbonsäureesterrest, einem Sulfonsäurerest oder einem Sulfonsäureesterrest mit 1 bis 10 Kohlenstoffatomen gebildet wird, wobei im Falle eines Esterrestes der Esterrest während oder nach Schritt (c) verseift wird.

17. Verfahren nach einem der Ansprüche 6 bis 16, dadurch gekennzeichnet, daß man als ionisierende Strahlung beschleunigte Elektronen einsetzt.

18. Verfahren nach Anspruch 17, dadurch gekennzeichnet, daß man beschleunigte Elektronen mit einer Elektronenenergie von mindestens 150 keV und einer Dosisleistung von mindestens 1 kGy * $s^{-1}$ einsetzt.

19. Verfahren nach Anspruch 18, dadurch gekennzeichnet, daß man eine Dosisleistung von 3 bis 50 kGy * $s^{-1}$ einsetzt.

20. Verfahren nach Anspruch 19, dadurch gekennzeichnet, daß man eine Gesamtdosis von 10 bis 1000 kGy anwendet.

21. Verfahren nach einem der Ansprüche 17 bis 20, dadurch gekennzeichnet, daß man die Bestrahlung unter Inertgasatmosphäre durchführt.

22. Polymermembran, bestehend aus einem Polymeren nach einem der Ansprüche 1 bis 5.

23. Verfahren zur Herstellung einer Polymermembran durch Behandeln eines Polymerfilms, bestehend aus einem Polymer der Formel I in Anspruch 6, nach einem Verfahren gemäß einem der Ansprüche 6 bis 21.

24. Verfahren nach Anspruch 23, dadurch gekennzeichnet, daß man als Polymerfilm einen homogenen, dichten Film einsetzt.

25. Verfahren nach Anspruch 24, dadurch gekennzeichnet, daß man als Polymerfilm einen schmelzextrudierten, geschälten, gesinterten oder gegossenen Film einsetzt.

26. Verfahren nach Anspruch 25, dadurch gekennzeichnet, daß man einen Film mit einer Dicke von 1 µm bis 1 mm einsetzt.

27. Verfahren nach Anspruch 26, dadurch gekennzeichnet, daß man einen Film mit einer Dicke von 5 bis 200 µm einsetzt.

28. Verfahren nach Anspruch 27, dadurch gekennzeichnet, daß man den Film über die ganze Dicke pfropft.

29. Polymermembran, erhalten durch ein Verfahren nach einem der Ansprüche 23 bis 28.

30. Verwendung der Polymermembran nach einem der Ansprüche 22 bis 29 in einem Pervaporationsverfahren.

31. Pervaporationsverfahren, bei dem kleine, einem Fluid zugesetzte organische Moleküle unter Verwendung einer Membran, durch die die Moleküle selektiv hindurchtreten, kontinuierlich aus dem Fluid abgetrennt werden, wobei die Abtrennung der Moleküle durch Kondensieren der Moleküle, durch Kühlung und/oder Anwendung von vermindertem Druck erfolgt, dadurch gekennzeichnet, daß man eine Membran nach einem der Ansprüche 22 bis 29 einsetzt.

## Claims

1. Polymer with a main molecular chain with the general formula I

$$-(CR^1R^2-CR^3R^4)_n- \qquad (I)$$

where the substituents $R^1$ to $R^4$, which may be the same or different, stand for H-, Cl- or F-atoms, alkyl groups or substituted alkyl groups especially halogenated all groups, preferably with 1 - 8 carbons, aryl groups or substituted aryl groups, especially halogen-substituted aryl groups, preferably with 6 - 18 carbons, or CN-groups, and n is an integer, characterized in that the polymer has at least one betaine function produced by grafting with a monomer suitable for the formation of a betaine function.

**2.** Polymer according to claim 1 characterized in that the betaine function is formed from at least one quaternary nitrogen atom as a positive center of the betaine function and at least one acid group as a negative center of the betaine function.

**3.** Polymer according to claim 2, characterized in that the acid groups are formed by sulfonic acid residues or carboxylic acid residues.

**4.** Polymer according to claim 2, characterized in that the at least one quaternary nitrogen atom is a heterocyclic nitrogen atom.

**5.** The polymer according to one of the preceding claims characterized in that the betaine function has one of the following structures:

VI:

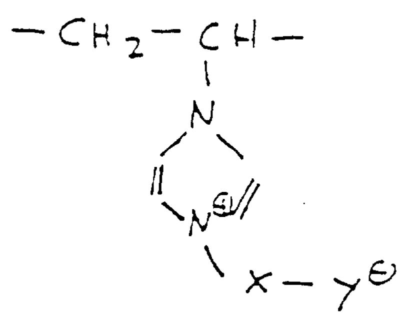

VII:

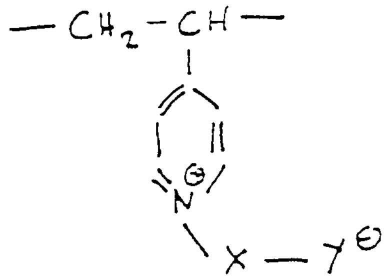

VIII:

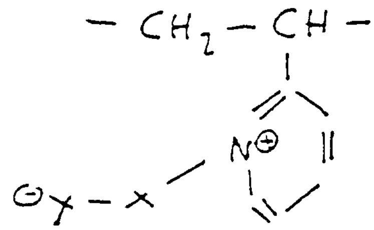

IX:

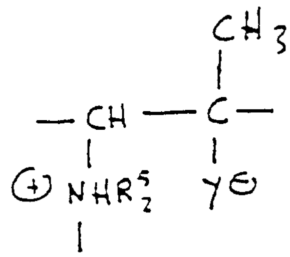

**6.** Process for producing a polymer characterized by the following process steps:

(a) Irradiating a starting polymer with the general formula I

$-(CR^1R^2-CR^3R^4)_n-$, (I)

where the substituents $R^1$ to $R^4$, which may be the same or different, stand for H-, Cl- or F-atoms, alkyl groups or substituted alkyl groups, especially halogen-substituted alkyl groups, preferably with 1 - 8 carbons, aryl groups or substituted aryl groups, especially halogen-substituted aryl groups, preferably with 6 - 18 carbons, or CN-groups, and n is an integer, by treatment with ionizing radiation;

(b) Treatment of the irradiated starting polymer with a monomer or monomer mixture that is capable of entering into a grafting reaction, where the monomer or the monomers of the mixture

(c1) either contain functional groups that form at least one betaine function,

(c2) or contain at least one functional group suitable for the formation of a betaine function which functional group is subsequently converted to a betaine function following the grafting reaction.

**7.** Process according to claim 6, characterized in that the starting polymer is polyethylene, polypropylene, polyvinyl fluoride, polyvinylidene fluoride, polytetrafluoride, polyvinyl chloride, polyvinylidene chloride, or a copolymer of polyethylene, polypropylene and halogenated polyolefins.

**8.** Process according to one of claims 6 or 7, characterized in that monomers capable of entering into a free radical graft reaction are used in step (b).

**9.** Process according to claims 6 to 8 characterized in that monomers with a graftable C-C double bond and a nitrogen atom that can be quaternated are used in step (b) and the quaternatable nitrogen atom is quaternated and alkylated with an alkylating reagent in step (c2), forming the positive center of the

betaine function, in which case the alkylating reagent has a functional group with an acid character (acid group) to form the negative center of the betaine function.

**10.** Process according to claim 9 characterized in that monomers with a heterocyclic quaternatable nitrogen atom are used.

**11.** Process according to claim 10, characterized in that an alkylating reagent is used whose functional group with an acid character is formed by a carboxylic acid group, a carboxylic acid ester group, a sulfonic acid group, or a sulfonic acid ester group with 1 to 10 carbon atoms, and in the case of an ester group the ester group is saponified during or after step (c).

**12.** Process according to one of claims 9 to 11, characterized in that at least one compound from the group 2-vinylpyridine, 4-vinylpyridine and N-vinylimidazole is used as the monomer.

**13.** Process according to claim 12, characterized in that the alkylating reagent is a halogenated carboxylic acid with 1 to 10 carbons or a salt thereof, a halogenated carboxylic acid ester with 1 to 10 carbons in the carboxylic acid, a halogenated sulfonic acid with 1 to 10 carbons or a salt thereof or a cyclic sulfonic acid ester with 2 to 10 carbons.

**14.** Process according to claim 13, characterized in that a compound from the group consisting of chloroacetic acid, bromoacetic acid, 4-(bromomethyl) benzoic acid, 2-bromopropionic acid, 3-bromopropionic acid, 1-bromomethanesulfonic acid, 4-(bromomethyl) benzenesulfonic acid, a sodium-, potassium- or ammonium salt of one of the aforementioned acids, bromoacetic acid methylester,$\gamma$-propanesultone or $\delta$-hexanesultone is used as the alkylating reagent.

**15.** Process according to one of claims 6 to 8, characterized in that monomers having an olefinic carbon-carbon double bound, a quaternatable nitrogen atom and a functional group with an acid character are used in step (b).

**16.** Process according to claim 15, characterized in that monomers are used whose functional group with an acid character is formed by a carboxylic acid group, a carboxylic acid ester group, a sulfonic acid group or a sulfonic acid ester group with 1 to 10 carbons, and in the case of an ester group the ester group is saponified during or after step (c).

**17.** Process according to one of claims 6 to 16, characterized in that accelerated electrons are used as the ionizing radiation.

**18.** Process according to claim 17, characterized in that accelerated electrons with an electron energy of at least 150 keV and a dose rate of at least 1 kGy • $s^{-1}$ are used.

**19.** Process according to claim 18, characterized in that a dose rate of 3 to 50 kGy • $s^{-1}$ is used.

**20.** Process according to claim 19, characterized in that a total dose of 10 to 1000 kGy is used.

**21.** Process according to one of claims 17 to 20, characterized in that the irradiation is performed under an inertgas atmosphere.

**22.** Polymer membrane consisting of a polymer according to one of claims 1 to 5.

**23.** Process for producing a polymer membrane by treating a polymer film consisting of a polymer of formula I in claim 6, by a process according to one of claims 6 to 21.

**24.** Process according to claim 23, characterized in that a homogeneous, dense film is used as the polymer film.

**25.** Process according to claim 24, characterized in that a melt extruded, peeled, sintered or cast film is used as the polymer film.

**26.** Process according to claim 25, characterized in that a film 1 µm to 1 mm thick is used.

**27.** Process according to claim 26, characterized in that a film 5 to 200 µm thick is used.

**28.** Process according to claim 27, characterized in that the film is grafted over its entire thickness.

**29.** Polymer membrane obtained by a process according to one of claims 23 to 28.

**30.** Use of the polymer membrane according to one of claims 22 to 29 in a pervaporation process.

**31.** Pervaporation process wherein small molecules added to a fluid are continuously removed from the fluid by using a membrane through which the molecules pass selectively, in which case the separation of the molecules is accomplished by condensation of the molecules, by cooling and/or applying a reduced pressure, characterized in that a membrane according to one of claims 22 to 29 is used in the process.

**Revendications**

**1.** Polymère comportant une chaîne principale moléculaire, de formule générale I

$-(CR^1R^2\text{-}CR^3R^4)_n-$ (I)

dans laquelle les substituants $R^1$ à $R^4$, qui peuvent être identiques ou différents, représentent des atomes de H, Cl ou F, des groupes alkyle ou des groupes alkyle substitués, en particulier substitués par des atomes d'halogène, ayant de préférence de 1 à 8 atomes de carbone, des groupes aryle ou des groupes aryle substitués, en particulier substitués par des atomes d'halogène, ayant de préférence de 6 à 18 atomes de carbone, ou de groupes CN, et n est un nombre entier, caractérisé en ce que le polymère présente au moins une fonction bétaïne qui est formée par greffage avec un monomère apte à la formation d'une fonction bétaïne.

**2.** Polymère selon la revendication 1, caractérisé en ce que la fonction bétaïne est constituée par au moins 1 atome d'azote quaternaire en tant que centre positif de la fonction bétaïne et par au moins un groupe acide en tant que centre négatif de la fonction bétaïne.

**3.** Polymère selon la revendication 2, caractérisé en ce que les groupes acide sont constitués de radicaux acide sulfonique ou de radicaux acide carboxylique.

**4.** Polymère selon la revendication 2, caractérisé en ce que le "au moins 1 atome d'azote quaternaire" est un atome d'azote faisant partie d'un hétérocycle.

**5.** Polymère selon l'une des revendications précédentes, caractérisé en ce que la fonction bétaïne présente l'une des structures suivantes:

VI:

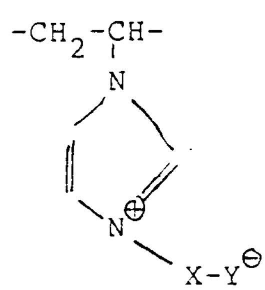

VII:

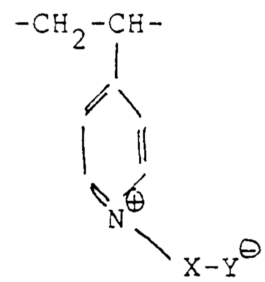

VIII:

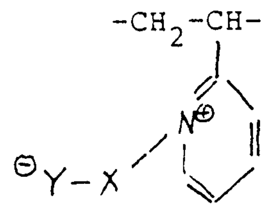

IX:

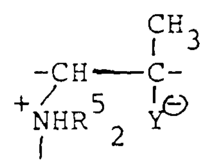

6. Procédé pour la préparation d'un polymère, caractérisé par les étapes de procédé suivantes:
   (a) irradiation d'un polymère de départ de formule I

   $-(CR^1R^2-CR^3R^4)_n-$ (I)

   dans laquelle les substituants $R^1$ à $R^4$, qui peuvent être identiques ou différents, représentent des atomes de H, Cl ou F, des groupes alkyle ou des groupes alkyle substitués, en particulier substitués par des atomes d'halogène, ayant de préférence de 1 à 8 atomes de carbone, des groupes aryle ou des groupes aryle substitués, en particulier substitués par des atomes d'halogène, ayant de préférence de 6 à 18 atomes de carbone, ou de groupes CN, et n est un nombre entier, à l'aide d'un rayonnement ionisant;
   (b) traitement du polymère ionisé de départ par un monomère ou mélange de monomères apte à la réaction de greffage, le monomère ou les monomères du mélange
      (c1) soit contenant des groupes fonctionnels qui constituent au moins une fonction bétaïne,
      (c2) soit contenant au moins un groupe fonctionnel, approprié à la formation d'une fonction bétaïne, qui est converti en une bétaïne à la suite de la réaction de greffage.

7. Procédé selon la revendication 6, caractérisé en ce que, en tant que polymère de départ, on utilise le polyéthylène, le polypropylène, le poly(fluorure de vinyle), le poly(fluorure de vinylidène), un polytétrafluorure, le poly(chlorure de vinyle), le poly(chlorure de vinylidène) ou un copolymère de polyéthylène, polypropylène et polyoléfines halogénées.

8. Procédé selon la revendication 6 ou 7, caractérisé en ce que l'on utilise dans l'étape (b) des monomères aptes à une réaction de greffage radicalaire.

9. Procédé selon les revendications 6 à 8, caractérisé en ce que dans l'étape (b) on utilise des monomères comportant une double liaison C-C apte au greffage et un atome d'azote apte à la quaternisation, et en ce que, dans l'étape (c2), l'atome d'azote apte à la quaternisation est rendu quaternaire par alkylation avec un agent d'alkylation, avec formation du centre positif de la fonction bétaïne, l'agent d'alkylation comportant un groupe fonctionnel à caractère acide (groupe acide) pour la formation du centre négatif de la fonction bétaïne.

10. Procédé selon la revendication 9, caractérisé en ce que l'on utilise des monomères comportant un atome d'azote apte à la quaternisation, faisant partie d'un hétérocycle.

11. Procédé selon la revendication 10, caractérisé en ce que l'on utilise un agent d'alkylation dont le groupe fonctionnel à caractère acide est constitué d'un radical acide carboxylique, d'un radical ester d'acide carboxylique, d'un radical acide sulfonique ou d'un radical ester d'acide sulfonique, ayant de 1 à 10 atomes de carbone, dans le cas d'un radical ester, le radical ester étant saponifié pendant ou après l'étape (C).

12. Procédé selon l'une des revendications 9 à 11, caractérisé en ce que l'on utilise en tant que monomère au moins un composé choisi parmi la 2-vinylpyridine, la 4-vinylpyridine et le N-vinylimidazole.

13. Procédé selon la revendication 12, caractérisé en ce que l'on utilise en tant qu'agent d'alkylation un acide carboxylique halogéné ayant de 1 à 10 atomes de carbone ou un sel de celui-ci, un ester d'acide carboxylique halogéné ayant, en ce qui concerne l'acide carboxylique, de 1 à 10 atomes de carbone, un acide sulfonique halogéné ayant de 1 à 10 atomes de carbone ou un sel de celui-ci, ou un ester d'acide sulfonique cyclique ayant de 2 à 10 atomes de carbone.

14. Procédé selon la revendication 13, caractérisé en ce que l'on utilise en tant qu'agent d'alkylation un composé choisi parmi l'acide chloracétique, l'acide bromoacétique, l'acide 4-(bromométhyl)-benzoïque, l'acide 2-bromopropionique, l'acide 3-bromopropionique, l'acide 1-bromométhanesulfonique, l'acide 4-(bromométhyl)-benzènesulfonique, un sel de sodium, potassium ou ammonium d'un des acides précités, le bromoacétate de méthyle, la $\gamma$-propanesultone ou la $\delta$-hexanesultone.

15. Procédé selon l'une des revendications 6 à 8, caractérisé en ce que, dans l'étape (b), on utilise un monomère portant un groupe fonctionnel à caractère acide et comportant une double liaison carbone-carbone oléfinique et un atome d'azote apte à la quaternisation.

16. Procédé selon la revendication 15, caractérisé en ce que l'on utilise des monomères dont le groupe fonctionnel à caractère acide est constitué d'un radical acide carboxylique, d'un radical ester d'acide carboxylique, d'un radical acide sulfonique ou d'un radical ester d'acide sulfonique, ayant de 1 à 10 atomes de carbone, dans le cas d'un radical ester, le radical ester étant saponifié pendant ou après l'étape (C).

17. Procédé selon l'une des revendications 6 à 16, caractérisé en ce que, en tant que rayonnement ionisant, on utilise des électrons accélérés.

18. Procédé selon la revendication 17, caractérisé en ce que l'on utilise des électrons accélérés ayant une énergie d'électrons d'au moins 150 keV et une intensité de dose d'au moins 1 $kGy.s^{-1}$.

19. Procédé selon la revendication 18, caractérisé en ce que l'on utilise une intensité de dose de 3 à 50 $kGy.s^{-1}$.

20. Procédé selon la revendication 19, caractérisé en ce que l'on utilise une dose totale de 10 à 1 000 kGy.

21. Procédé selon l'une des revendications 17 à 20, caractérisé en ce que l'on effectue l'irradiation sous une atmosphère de gaz inerte.

22. Membrane en polymère, constituée d'un polymère selon l'une des revendications 1 à 5.

23. Procédé pour la préparation d'une membrane en polymère, par traitement d'une pellicule de polymère, constituée d'un polymère de formule I dans la revendication 6, selon un procédé conforme à l'une des revendications 6 à 21.

24. Procédé selon la revendication 23, caractérisé en ce que l'on utilise en tant que pellicule de polymère une pellicule homogène, compacte.

**25.** Procédé selon la revendication 24, caractérisé en ce que l'on utilise en tant que pellicule de polymère une pellicule extrudée à l'état fondu, tranchée, frittée ou coulée.

**26.** Procédé selon la revendication 25, caractérisé en ce que l'on utilise une pellicule ayant une épaisseur de 1 µm à 1 mm.

**27.** Procédé selon la revendication 26, caractérisé en ce que l'on utilise une pellicule ayant une épaisseur de 5 à 200 µm.

**28.** Procédé selon la revendication 27, caractérisé en ce que l'on greffe la pellicule sur toute son épaisseur.

**29.** Membrane en polymère, obtenue par un procédé selon l'une des revendications 23 à 28.

**30.** Utilisation de la membrane en polymère selon l'une des revendications 22 à 29, dans un procédé de pervaporation.

**31.** Procédé de pervaporation, dans lequel de petites molécules organiques ajoutées à un fluide sont séparées du fluide en continu par utilisation d'une membrane à travers laquelle les molécules passent sélectivement, la séparation des molécules étant effectuée par condensation des molécules, par refroidissement et/ou application de pression réduite, caractérisé en ce que l'on utilise une membrane selon l'une des revendications 22 à 29.